# EUROPEAN PATENT SPECIFICATION

(11) **EP 2 023 162 B1**
(45) Date of publication and mention of the grant of the patent: **21.11.2012**
(21) Application number: 08460034.5
(22) Date of filing: 07.08.2008
(51) Int. Cl.: G01T 1/17, G01T 1/24, G01T 1/20, G21J 5/00

(54) **Motor vehicle resistant to the effects of nuclear explosion**
Motorfahrzeug, das gegen die Wirkung der Kernexplosion widerstandsfähig ist
Véhicule à moteur résistant aux effets d'une explosion nucléaire

(30) Priority: 10.08.2007 PL 38378107
(43) Date of publication of application: 11.02.2009
(73) Proprietor: Pimco sp z o.o., 02-815 Warszawa (PL)
(72) Inventor: Maziejuk, Miroslaw, 05-091 Zabki (PL); Palijczuk, Dariusz, 05-480 Karczew (PL)
(74) Representative: Adamczyk, Piotr

(56) References cited:
- EP-B1- 0 375 120
- GB-A- 2 136 648
- US-A- 4 573 396
- US-A- 4 687 622

## Description

The subject of the invention is a motor vehicle resistant to the effects of nuclear explosion.

The physical phenomena that accompany nuclear explosion may have a destructive influence on both living organisms and technical devices, electronic ones in particular. An efficient protection against the effects of such ;explosion requires a suitably early detection of the explosion itself followed by the quickest activation of the available means of protection. There are known detection systems which employ the following phenomena accompanying nuclear explosion: electromagnetic impulse, light impulse, neutron radiation and prompt gammas.

In US 4 687 622 has been disclosed a nuclear detector with gamma radiation sensor connected to the input of the electronic detection system using as gamma radiation sensor a gamma radiation converter converting gamma radiation to electric current signal. The electronic detection system comprises a current-voltage converter, a high-pass filter and a transistor element which causes the detector to detect if the gate voltage exceeds a certain value.

A nuclear explosion detector can be a part of a motor vehicle resistant to the explosion, disclosed for example in US 4 573 396.

A vehicle according to the invention contains an explosion detector with protective actuation systems activated after an explosion is detected. The explosion detector in the vehicle consists of the converter converting gamma radiation to circuit signal and connected with the input of the electronic detection system. The vehicle electronic detection system comprises a current-voltage converter with conversion ratio of 1 µA/1 V, an eliminator which eliminates signal components whose frequencies are lower than 1 kHz and a voltage comparator. The three mentioned components of detection systems are connected in series. In the detection system the output of the signal component eliminator is connected to the first input of the voltage comparator and the second input of the voltage comparator is connected to a stabilized voltage supply with adjustable value. The protective actuation systems of the vehicle consist of an engine kill system and a system for closing vehicle air intakes. In one of the variants of the vehicle a silicon photodiode with a scintillator is employed as a gamma radiation converter.

In a another variant the vehicle has a gamma radiation converter of sensitivity equals 1 µA of the electric current per each 100 mG/h of the radiation.

In yet another variant of the vehicle the explosion detector comprises an additional source of electromagnetic radiation with wave length ranging from 670 nm to 1100 nm and intensity of at least 0.7 W/sr directed at the gamma radiation converter. Advantageously a luminescent diode located near the gamma radiation converter may act as a source of the said radiation.

The vehicle according to the invention allows for reconnoitering of radioactive pollutants, including areas with high pollution levels, while maintaining the capability for the detection of the next explosion and a timely activation of the protective actuation systems.

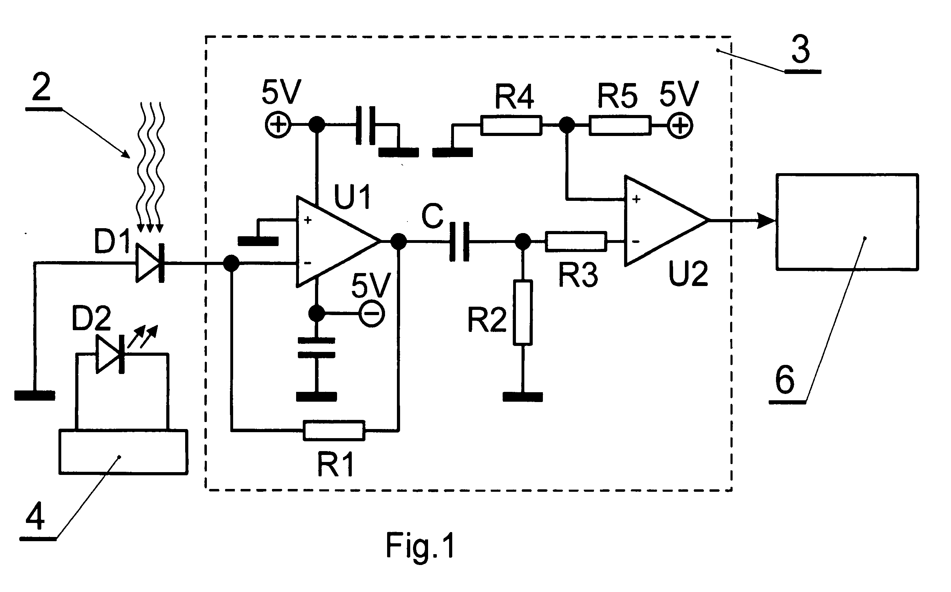

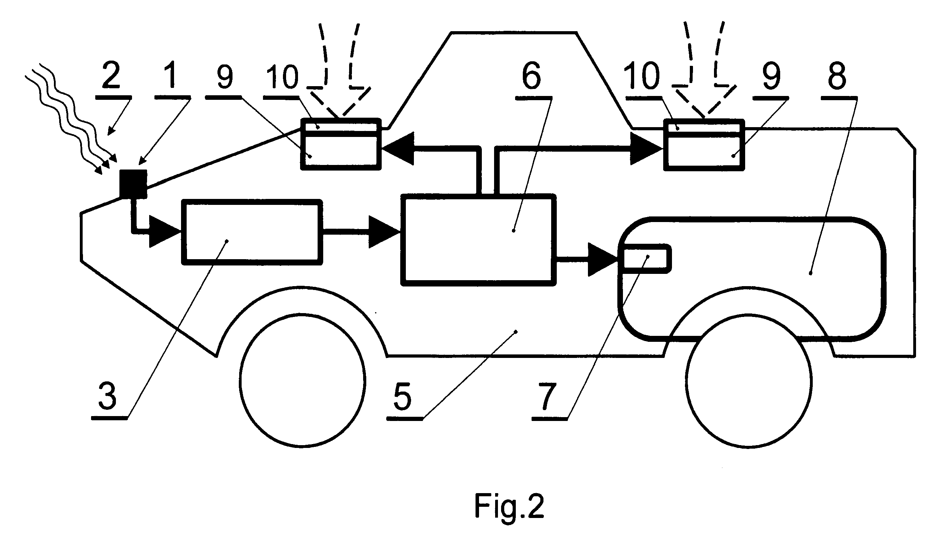

The invention has been presented on the attached drawings where Fig. 1. depicts a schematic diagram of exemplary explosion detector while Fig. 2 depicts the block diagram of the vehicle according to the invention with such detector.

In exemplary nuclear explosion detector the converter 1 converting gamma radiation 2 into the current signal is the S8193 type silicon photodiode D1 with a built-in scintillator with sensitivity 1 µA of the electric current per each 100 mG/h of radiation. The electronic detection system 3 comprises a current-voltage converter with conversion ratio of 1 µA/1 V, an eliminator which eliminates signal components whose frequencies are lower than 1 kHz and a voltage comparator. The three components of the electronic detection system 3 are connected in series.

The current-voltage converter has been built on the basis of the operational amplifier U1 with very high input resistance (exceeding 10¹¹Ω, e.g.: the TL072 type), which has a resistor R1 with 1 MΩ resistance in the feedback loop. A resistor-capacitor filter comprising a capacitor C with 1 nF capacity and a resistor R2 with 10KΩ resistance has the function of an old and slow-changing component eliminator. The second operational amplifier U1 (also the TL072 type), whose first input is connected to the output of the said resistor-capacitor filter via a matching resistor R3 with 100kΩ resistance, has the function of a voltage comparator. The second input of the amplifier U2 is connected favorably to the stabilized voltage supply of 1 V. The value of this voltage determines the explosion detector actuation threshold.

In order to allow for the detection channel testing without using gamma radiation, a luminescent diode D2, which is controlled by a test system 4, is directed at the photodiode. When requested diode D2 emits IR radiation with intensity of at least 0.7 W/sr, thereby inducing a current signal in photodiode D1 whose magnitude is similar to the signal induced by prompt gammas 2 resulting from an explosion.

The detector mentioned above may be used for the protection of a motor vehicle 5, e.g. an armored carrier. The detection of a nuclear explosion results in the generation at the output of the amplifier U2 of a short rectangular pulse whose duration is equal to the gamma radiation impulse. The said impulse triggers the microprocessor system 6 which controls the protective actuation systems, e.g.: the propulsion engine kill 8 system 7 of the vehicle 5 and the vehicle 5 air intake shutting 10 system 9. Depending on the distance from the ground zero the microprocessor system may only signal the detection of an explosion leaving the decision on the possible actions to be taken to the crew and generate a warning against a light impulse accompanying the explosion which can have a detrimental effect on the crew's eyesight.

## Claims

1. A motor vehicle resistant to the effects of a nuclear explosion, containing an explosion detector with protective actuation systems activated after the explosion is detected, **characterized by** the explosion detector being a gamma radiation converter (1) converting gamma radiation to electric current signal connected to the input of an electronic detection system (3) comprising connected in series a current-voltage converter with conversion ratio of 1 µA/1 V, a signal components eliminator which eliminates signal components whose frequencies are lower than 1 kHz and a voltage comparator, wherein the first output of the signal components eliminator is connected with the first input of the voltage comparator and the second input of the voltage comparator is connected with a stabilized voltage source with adjustable voltage value, while the protective actuation systems comprise the vehicle engine (8) kill system (7) and a system for closing the vehicle (5) air intakes (10).

2. The vehicle according to Claim 1, **characterized by** the gamma radiation converter (1) being a silicon photodiode (D1) with a scintillator.

3. The vehicle according to Claims 1 or 2, **characterized by** sensitivity of the gamma radiation converter (1) equal to 1 µA of the electric current per each 100 mG/h of the gamma radiation.

4. The vehicle according to any Claim from 1 to 3, **characterized in that** the explosion detector comprises additionally an electromagnetic radiation source (D2) with wave length ranging from 670 nm to 1100 nm and intensity of at least 0.7 W/sr directed at the gamma radiation converter (1).

5. The vehicle according to Caim 4, **characterized by** the electromagnetic radiation source being a luminescent diode (D2) located near the gamma radiation converter (1).

## Patentansprüche

1. Ein Kraftfahrzeug das gegen Effekte einer nuklearen Explosion widerstandsfähig ist und enthält ein Explosionsdetektor mit einem Schutz-Aktivierungssystem das nach Entdeckung einer Explosion aktieviert wird, **gekennzeichnet durch**, dass ein Explosionsdetektor eines Gammastrahlungskonverters (1) ist der die Gammastrahlung zum Signal von elektrischem Strom umsetzt, welches Signal an dem Eingang von einem elektronischen Entedeckungssystem (3) angeschlossen ist, wobei dieses System die seriengeschalteten Einheiten wie folgt enthält: ein Strom-Spannungs-Umsetzter von einem Konversions-Verhältnis von 1 µA/1 V, ein Signalkomponenten-Entferner die Signalkomponenten derer Frequenzen niedriger als 1 kHz eliminiert und ein Spannungskomparator, wo der erste Ausgang des Signalkomponentenentferners mit dem ersten Eingang des Spannungskomparators verbunden ist und wo der zweite Eingang des Spannungskomparators mit einer Quelle der stabilisierten und dem Wert nach einstellbarer Spannung verbunden ist, während das Schutz-Aktivierungssystem ein Motor-Kill-System (7) des Motors (8) des Fahrzeuges und ein System fürs Zumachen des Lufteinlaufes (10) des Fahrzeuges (5) enthält.

2. Das Fahrzeug nach Anspruch 1, **dadurch gekennzeichnet, dass** es der Gammastrahlungskonverter (1) eine Silikon-Photodiode (D1) mit einem Szintiltor ist.

3. Das Fahrzeug nach Anspruch 1 oder 2, **dadurch gekennzeichnet, dass** die Sensitivität des Gammastrahlungskonverters (1) 1µA vom Strom per jede 100 mG/h der Gammastrahlung beträgt.

4. Das Fahrzeug nach Anspruch 1 bis 3, **dadurch gekennzeichnet, dass** die Explosionsentdecker eine zusätzliche Quelle der elektromagnetischen Strahlung enthält (D2) von einer Wellenlänge im Bereich von 670 nm bis 1100 nm und einer Intensität mindestens 0,7 W/sr und welche nach dem Gammastrahlungskonverter (1) gerichtet ist enthält.

5. Das Fahrzeug nach Anspruch 4, **dadurch gekennzeichnet, dass** die Quelle der elektromagnetischen Strahlung eine nahe dem Gammastrahlungskonverter (1) angebrachte luminiszierende Diode (D2) ist.

## Revendications

1. Véhicule à moteur résistant aux effets d'une explosion nucléaire, contenant un détecteur d'explosion avec des systèmes d'actionnement de protection activés après l'explosion est détectée, **caractérisé par** le détecteur d'explosion étant un convertisseur de rayonnement gamma (1) convertissant le rayonnement gamma à un signal de courant électrique associé à l'entrée d'un système de détection électronique (3) comprenant (raccordés en série): un convertisseur courant-tension avec un taux de conversion de 1 µA/1 V, un éliminateur d'éléments de signal qui élimine les éléments de signal dont les fréquences sont inférieures à 1 kHz et un comparateur de tension, où la première sortie de l'éliminateur d'éléments de signal est reliée à la première entrée du comparateur de tension et la deuxième entrée du comparateur de tension est reliée à une source de tension stabilisée à une valeur de tension réglable, tandis que les systèmes d'actionnement de protection comprennent un système d'arrêt (7) du moteur (8) du véhicule et un système de fermeture des entrées d'air (10) du véhicule (5).

2. Véhicule suivant la revendication 1, **caractérisé par** le convertisseur de rayonnement gamma (1) étant une photodiode au silicium (D1) avec un scintillateur.

3. Véhicule suivant l'une des revendications 1 ou 2, **caractérisé par** la sensibilité du convertisseur de rayonnement gamma (1) égale à 1 µA du courant électrique pour chaque 100 mG/h de rayonnement gamma.

4. Véhicule suivant l'une quelconque des revendications 1 à 3, **caractérisé en ce que** le détecteur d'explosion comprend en outre une source de rayonnement électromagnétique (D2) avec une longueur d'onde allant de 670 nm à 1100 nm et l'intensité d'au moins 0,7 W/sr dirigés vers le convertisseur de rayonnement gamma (1).

5. Véhicule suivant la revendication 4, **caractérisé par** la source de rayonnement électromagnétique étant une diode luminescente (D2) située près du convertisseur de rayonnement gamma (1).
